# EUROPEAN PATENT SPECIFICATION

(11) **EP 0 964 892 B1**
(45) Date of publication and mention of the grant of the patent: **18.06.2003**
(21) Application number: 98905874.8
(22) Date of filing: 18.02.1998
(51) Int. Cl.: C08L 61/06, C08L 31/04

(54) **BINDER PREPARATION FOR MINERAL WOOL AND THE OBTAINED MINERAL WOOL**
BINDEMITTEL FÜR MINERALWOLLE UND DAMIT HERGESTELLTE MINERALWOLLE
PREPARATION DE LIANT POUR LAINE MINERALE ET LAINE MINERALE AINSI OBTENUE

(30) Priority: 13.03.1997 NL 1005519
(43) Date of publication of application: 22.12.1999
(73) Proprietor: Rockwool Lapinus B.V., 6045 JG Roermond (NL)
(72) Inventor: ETTEMA, Antonius, Marinus, NL-6049 KV Herten (NL); EISINGER, Charel, David, NL-6095 CA Baexem (NL)
(74) Representative: Prins, Hendrik Willem
(86) International application number: NL9800098
(87) International publication number: WO98040437

(56) References cited:
- EP-A- 0 097 921
- GB-A- 1 459 841
- US-A- 4 746 565
- CHEMICAL ABSTRACTS, vol. 77, no. 8, 21 August 1972 Columbus, Ohio, US; abstract no. 49476, page 51; XP002045083 & SU 324 253 A (SUKACHEVA E.D. ET ALL.) 23 December 1971
- 'Brockhaus Enzyklopädie, 19th edn.', VOL. 8 see page 438

## Description

The present invention relates to a the use of binder preparation for mineral wool, and to a mineral wool which is obtained using such a binder preparation.

In the manufacture of mineral wool products, mineral fibres are mutually connected by means of a binder. This binder generally consists of a water-dilutable, thermocuring phenol-formaldehyde resin of the resole type. The phenol-formaldehyde resin can be used in non-polymerized, initially polymerized or in a partly polymerized form. The binder is sprayed onto the mineral fibres which form a blanket. This blanket of mineral wool fibres is guided through a curing oven, in which the thermocuring phenol-formaldehyde resin is cured under the influence of heat. Depending on the degree of exerted pressure, a mineral wool product is obtained of different densities.

Different substances can be added to the binder in order to prevent the emission of phenol, formaldehyde, ammonia and the like. Such additives contain mono- or oligosaccharides, urea and the like.

Such mineral wool products can be used as insulation products and possess for this purpose good water-repellency and fire resistance. A drawback to such known products is that during processing mineral fibres are released from the product which can cause skin irritation and itching and can further result in dust formation. An additional drawback is that after compression of the mineral wool product, for instance for transport, the product cannot regain its original form after the compression pressure has been removed. All these drawbacks find their origin in the use of phenol-formaldehyde resin, which is practically inflexible after curing. Mineral fibre breakage will therefore occur, after mechanical load whereby fibres can be released from the product.

The present invention has for its object to obviate the above stated drawbacks as far as possible and particularly to improve the binder for mineral wool products in the sense that the skin-compatibility and shape recovery after compression is improved and the dust production decreases.

This is achieved according to the invention by providing an aqueous dispersion of phenol-formaldehyde resin and polyvinyl acetate.

It has been found from research that by adding polyvinyl acetate to the phenol-formaldehyde resin a binder preparation is obtained, the flexibility of which is considerably improved after curing. The improved flexibility after curing reduces the chance of fibre breakage after mechanical load, whereby skin-compatibility, shape recovery after compression improve and dust production is reduced. A quantity of polyvinyl acetate can be added subject to the desired degree of improvement of the properties.

In general the quantity of added polyvinyl acetate in weight ratio relative to the weight ratio of phenol-formaldehyde resin amounts to 95:5 to 5:95. Good results are usually obtained with ratios which vary from 90:10 to 10:90. Optimum results are obtained if the ratio of phenol-formaldehyde resin to polyvinyl acetate varies from 80:20 to 60:40. Excellent results are obtained at a ratio of 85:15 to 70:30.

If in addition the flexibility of the mineral wool product must be improved, use can be made of a polyvinyl acetate consisting of a copolymer of vinyl acetate and ethylene. For instance 95:5 to 70:30, such as 90:10 to 80:20. More particularly 85:15 and 82:18 w/w.

If the fire resistance of the mineral wool product must be further improved, it is recommended to make use of a polyvinyl acetate consisting of a copolymer of vinyl acetate and vinyl chloride (95:5 to 70:30, such as 90:10 to 80:20 w/w).

The fire resistant properties can moreover also be further improved in combination by adding to the aqueous dispersion a fire resistant substance for instance of 1-10% by weight, such as 1-5% by weight, such as halogen compounds, phosphorus compounds, such as ammonium polyphosphate and phosphonates.

If in addition the water-repellent properties of the mineral wool product must be improved, use can be made of a vinyl acetate homopolymer or copolymer with good hydrophobic properties. The water-repellent properties can moreover be further improved by adding a water-repellent agent to the aqueous dispersion. Use can be made in this case of for instance mineral wool and/or silicone oil. Mineral wool can be added in a quantity of 4 litre/1000 kg mineral wool and silicone oil can be added in a quantity of 0.4 litre/1000 kg mineral wool.

The mineral wool products and the binder preparation intended therefor can consist of all known types of mineral fibre or combination of fibres. Glass fibres, slag fibres, rock fibres and quartz fibres can for instance be used. All fibres can be produced in their usual manner and have the usual fibre diameter distributions and fibre length distributions. The mineral wool has a very high porosity in that the solid content generally amounts to 1 to 10% by weight, such as 3-9% by weight. All normal porosities can however be envisaged.

The density of the mineral wool varies between 5 and 200 kg/m³, such as 10-180 kg/m³, more particularly 30-120 kg/m³. This depends on the application purpose of the mineral wool and the possible mechanical load in such an application. The mechanical load is less if the mineral wool is used as insulation in cavity walls but is considerably higher when it is used as roofing board.

The binder preparation used in the invention is added in a quantity which generally amounts to from 0.5 to 10% by weight of the preparation. For light products the quantity of binder generally amounts to less than 2% by weight. For heavier products the quantity of binder generally amounts to between 2 and 4% by weight. The quantity of added binder is in fact determined by the desired properties of the mineral wool preparation and the mechanical loads to be anticipated therein. A minimum quantity of binder is added such that a coherent, i.e. form-retaining, product is obtained.

The phenol-formaldehyde resin is a conventional resin and is supplied in the form of a dispersion with a solid content generally amounting to about 50% by weight. However, when the phenol-formaldehyde resin is applied to the fibres a further dilution generally takes place to a solid content of 10 to 20% by weight. As a result of this further dilution it is possible to incorporate the polyvinyl acetate in the phenol-formaldehyde resin while retaining the dispersion form in water. Use can be made for instance of polyvinyl acetate dispersions with a solid content which substantially corresponds with the solid content of the phenol-formaldehyde resin. Starting from equal or mutually differing solid contents for the phenol-formaldehyde resin and for the polyvinyl acetate, all desired mutual weight ratios can be obtained before the binder preparation is applied to the mineral fibres and prior to curing in the curing oven.

As polyvinyl acetate use can for instance be made of jowapol (EP 300306) from Jowat GmbH. Another usable polyvinyl acetate is EP 177 (copolymers of vinyl acetate and ethylene) from Wacker GmbH. Another suitable product is vinamul R31246 from Vinamul Geleen.

Mentioned and other features of the binder preparation used in the invention used for manufacturing mineral wool products will be further elucidated hereinbelow with reference to the experimental results for the various properties of the mineral wool products obtained with such a binder preparation. It is noted, perhaps unnecessarily, that these experimental results are given solely by way of support, illustration and elucidation and are certainly not intended to limit the invention in any way.

The experimental results are particularly set out to show that the mineral wool products obtained with the binder preparation possess good properties with regard to skin-compatibility, dust reduction, recovery, water-repellency and fire resistance.

For this purpose mineral wool products are manufactured on the basis of rockwool fibres which are generated with the conventional cascade spinning process and whereafter the binder preparation used in the invention is applied by atomization to the rockwool fibres moving in the cooling air flow which are then arranged on a conventional conveyor in order to obtain a mineral wool blanket. This mineral wool blanket is subsequently guided through a curing oven in order to cure the binder preparation used in the invention. The experiments were then performed on the obtained products.

The phenol-formaldehyde resin used contained 480 litres of phenol-formaldehyde resin, 35 litres of ammonia, 1270 litres of water and had a specific weight of 1045 kg/m³. This resin with a solid content of about 45% is used in the mixtures with polyvinyl acetate indicated below.

The obtained mineral wool products in the form of slabs were subsequently subjected to a number of experimental tests.

In the dust emission test the slab of mineral wool was placed on a grid above an open collecting tray. The slab of mineral wool was provided with a plywood board. A 5 kg weight was then dropped onto the plywood board from a height of 1 metre. The quantity of dust in grams collected in the tray was subsequently determined at an opening of 1 m². The quantity of dust emission was thus determined in grams per m².

In the determining of the water-repellency, a determined quantity of the mineral wool product was held immersed at least 2.5 cm under water and removed from the water after 5 minutes. After draining for 5 seconds and shaking off adhering water the water-repellency was determined by re-weighing. A water-repellency of 99.7% indicates that the weight of the product has increased by 0.3% through immersion.

The breaking strength was determined in order to gain an impression of the binding strength of the binder. For this purpose 500 grams of sieved sand was mixed with 100 millilitres of a 15% resin preparation solution. Drying took place in a mould for 1.5 hours at 160°C. After cooling the rods were held under water for 3 hours or for 5 hours at a temperature of 80°C. The breaking strength was subsequently determined with a tensile compression bench.

The recovery is a measure for the capacity of a mineral wool product to regain the original dimensions after compression. For this purpose a product with a height of 32.0 cm was compressed by 25% or by 50%. The compressed state was maintained for 4 weeks. The compression was then removed and, after recoiling of the product, it was determined to which height the product recoiled. The recovery is a measure for the loss of thickness resulting from a reduced recoil.

The fire resistance was determined in accordance with the DIN norm 4102. Determined in accordance with this norm, class 1 products are characterized by a flame time and smoulder time both of 0 seconds. A class 2 product may exhibit flame phenomena for less than 20 seconds and smoulder phenomena for less than 20 seconds.

Finally, the skin-compatibility by means of a panel test. For this purpose a number of test subjects were asked to simulate the use of the product and herein assess the product for smoothness, prickliness, dust emission and skin irritation. A comparison was herein made with a.commercial product wherein use was made solely of phenol-formaldehyde as binder. In a test performed with 11 people, all products according to the invention were clearly classified as discernibly better in respect of the skin-compatibility in that no skin irritation or prickliness was experienced by the test subjects of the panel.

### Experiment 1

A binder preparation was prepared for mineral wool. The above mentioned phenol-formaldehyde resin mixture (45% solid substance) was mixed with vinamul R31246 which has a solid content of 45%. Phenolformaldehyde resin and the polyvinyl acetate were mixed in a ratio of 70:30.

This product had a very good skin-compatibility in the panel test. The dust emission amounted to only 0.25 g/m² compared to a conventional product which gave a dust emission of 1.4 g/m². When both test products were pre-sawn for tailoring, the dust emission values amounted to 2.3 g/m² for the product according to the invention and 4 g/m² for the conventional product.

The loss of thickness at 25% compression for 4 weeks amounted to 5.6% for the conventional product and to only 1.9% for the product according to the invention. At 50% compression for 4 weeks the loss of thickness for the conventional product amounted to 7.8% and for the product according to the invention to only 2.5%. It is apparent that the product according to the invention limits loss of thickness to about 1/3 of the conventional loss of thickness.

### Experiment 2

In order to increase the water-repellency, 4 litres of mineral wool or 4 litres of mineral wool and 0.4 litre of silicone oil was added per ton of mineral wool product during production. Mineral wool and silicone oil could be injected separately but could also be added to the binder preparation according to the invention. In the case of 4 litres of mineral wool per ton, a water-repellency was obtained of more than 94%. In the case of the combined use of mineral wool and silicone oil, a water-repellency of 96% was obtained. It is noted that the product must possess a minimum water-repellency of 94%.

These products were also subjected to a fire test in accordance with DIN norm 4102. They exhibited a flame time of 1-4 seconds. These products could thus be grouped in class A2.

### Experiment 3

A mineral wool product was manufactured making use of the binder preparation used in the invention in which use was made of phenol-formaldehyde resin and Jowat/EP 300306 in a ratio of 70:30 and 85:15.

The conventional product had a breaking strength prior to the water bath test of 2.18 Newton per mm². After three hours in the water bath the breaking strength decreased to 0.40 and after 5 hours to 0.36 Newton per mm².

The product with EP 300306 had a lower initial breaking strength of 1.66, but after 3 hours water bath the breaking strength was 0.48 and after 5 hours 0.44 Newton per mm². The product with 15% EP 300306 had an initial breaking strength of 1.32, after 3 hours water bath of 0.31 and after 5 hours of water bath of 0.27 Newton per mm².

### Experiment 4

Using a binder preparation according to the invention on a basis of phenol-formaldehyde resin and vinyl acetate ethylene copolymer (EP 177 from Wacker Chemie) breaking strength tests were performed. The control results gave the same values as in the previous experiment. Polyvinyl acetate in a quantity of 30% gave an initial breaking strength of only 1.80 Newton per mm², but the breaking strength after 3 hours only decreased to 0.60 and after 5 hours to 0.52 Newton per mm². In the case of 15% EP 177 the initial breaking strength was higher (1.85 Newton per mm²) and decreased after 3 hours to 0.42 and after 5 hours to 0.4 Newton per mm².

It is noted that the breaking strength results are all determined on the basis of at least 2 measurements.

The foregoing results demonstrate that, with the binder preparation used in the invention based on phenol-formaldehyde resin and polyvinyl acetate, mineral wool products can be obtained with a greatly improved skin-compatibility, greatly reduced dust emission and greatly reduced loss of thickness. Water-repellency and fire resistant properties can be adapted as required.

## Claims

1. Use of a binder preparation containing an aqueous dispersion of phenol-formaldehyde resin and polyvinyl acetate as a binder preparation for a mineral wool product comprising a coherent matrix of mineral wool fibres having a density of 5 to 200 kg/m³.

2. Use as claimed in claim 1, wherein the weight ratio of phenol-formaldehyde resin and polyvinyl acetate varies from 95:5 to 5:95.

3. Use as claimed in claim 2, wherein the weight ratio of phenol-formaldehyde resin and polyvinyl acetate varies from 90:10 to 10: 90.

4. Use as claimed in claim 2 or 3, wherein the weight ratio of phenol-formaldehyde resin and polyvinyl acetate varies from 80:20 to 60:40.

5. Use as claimed in claims 1-4, wherein the polyvinyl acetate is a copolymer of vinyl acetate and ethylene.

6. Use as claimed in claims 1-4, wherein the polyvinyl acetate is a copolymer of vinyl acetate and vinyl chloride.

7. Use as claimed in claims 1-6, wherein the binder preparation contains a water-repelling agent.

8. Use as claimed in claim 7, wherein the water-repelling agent comprises mineral wool, silicon oil.

9. Use as claimed in claims 1-8, wherein the binder preparation contains a fire resistant substance.

10. Use as claimed in claim 9, wherein the fire resistant substance comprises halogen compounds, phosphorus compounds, ammonium polyphosphate.

11. Mineral wool product comprising a coherent matrix of mineral wool fibres bound with a cured binder preparation, as claimed in claim 1-10, having a density of 5 to 200 kg/m³.

12. Mineral wool product as claimed in claim 11, comprising 0.5 to 10% by weight of the binder preparation.

13. Mineral wool product as claimed in claim 11 or 12, with a dust emission of less than 1 g/m² when the mineral wool product is placed on a grid and provided with a plywood board and a 5 kg weight is dropped on the plywood board from a height of 1 meter.

14. Mineral wool product as claimed in claim 13, wherein the dust emission is less than 0.5 g/m², preferably less than 0.3 g/m².

15. Mineral wool product as claimed in claims 11-14, with a loss of thickness after 25% compression for 4 weeks of less than 5%.

16. Mineral wool product as claimed in claim 15, wherein the loss of thickness after 25% compression for 4 weeks is less than 3%, preferably less than 2%.

## Patentansprüche

1. Verwendung einer Bindemittelzubereitung, die eine wässrige Dispersion von Phenol-Formaldehyd-Harz und Polyvinylacetat enthält, als Bindemittelzubereitung für ein Mineralwolle-Produkt, das eine kohärente Matrix von Mineralwolle-Fasern mit einer Dichte von 5 bis 200 kg/m³ umfaßt.

2. Verwendung wie im Anspruch 1 beansprucht, wobei das Gewichtsverhälntis des Phenol-Formaldehyd-Harzes und des Polyvinylacetats von 95:5 bis 5:95 reicht.

3. Verwendung wie im Anspruch 2 beansprucht, wobei das Gewichtsverhältnis des Phenol-Formaldehyd-Harzes und des Polyvinylacetats von 90:10 bis 10:90 reicht.

4. Verwendung wie im Anspruch 2 oder 3 beansprucht, wobei das Gewichtsverhältnis des Phenol-Formaldehyd-Harzes und des Polyvinylacetats von 80:20 bis 60:40 reicht.

5. Verwendung wie in den Ansprüchen 1 bis 4 beansprucht, wobei das Polyvinylacetat ein Copolymer von Vinylacetat und Ethylen ist.

6. Verwendung wie in den Ansprüchen 1 bis 4 beansprucht, wobei das Polyvinylacetat ein Copolymer von Vinylacetat und Vinylchlorid ist.

7. Verwendung wie in den Ansprüchen 1 bis 6 beansprucht, wobei die Bindemittelzubereitung ein wasserabstoßendes Mittel enthält.

8. Verwendung nach Anspruch 7, wobei das wasserabstoßende Mittel Mineralwolle, Silikonöl umfaßt.

9. Verwendung wie in den Ansprüchen 1 bis 8 beansprucht, wobei die Bindemittelzubereitung eine feuerresistente Substanz enthält.

10. Verwendung wie im Anspruch 9 beansprucht, wobei die feuerresistente Substanz Halogenverbindungen, Phosphorverbindungen, Ammoniumphosphat umfaßt.

11. Mineralwolle-Produkt, welches eine kohärente Matrix von Mineralwolle-Fasern umfaßt, die mit einer gehärteten Bindemittelzubereitung wie in den Ansprüchen 1 bis 10 beansprucht gebunden sind, mit einer Dichte von 5 bis 200 kg/m³.

12. Mineralwolle-Produkt wie im Anspruch 11 beansprucht mit 0,5 bis 10 Gew.-% der Bindemittelzubereitung.

13. Mineralwolle-Produkt wie im Anspruch 11 oder 12 beansprucht, mit einer Staubemission von weniger als 1 g/m², wenn das Mineralwolle-Produkt auf ein Gitternetz gelegt wird und mit einer Sperrholzplatte versehen wird und ein 5 kg-Gewicht auf die Sperrholzplatte aus einer Höhe von 1 m fallen gelassen wird.

14. Mineralwolle-Produkt wie im Anspruch 13 beansprucht, wobei die Staubemission weniger als 0,5 g/m², vorzugsweise weniger als 0,3 g/m² beträgt.

15. Mineralwolle-Produkt wie in den Ansprüchen 11 bis 14 beansprucht, mit einem Verlust an Dicke, nach einer 25%-igen Kompression für 4 Wochen, von weniger als 5%.

16. Mineralwolle-Produkt wie im Anspruch 15 beansprucht, wobei der Verlust an Dicke, nach einer 25%-igen Kompression für 4 Wochen, weniger als 3%, vorzugsweise weniger als 2% beträgt.

## Revendications

1. Utilisation d'une préparation de liant contenant une dispersion aqueuse de résine de phénol-formaldéhyde et d'acétate de polyvinyle comme préparation de liant pour un produit en laine minérale comprenant une matrice cohérente de fibres de laine minérale ayant une densité de 5 à 200 kg/m³.

2. Utilisation selon la revendication 1, où le rapport de poids de la résine de phénol-formaldéhyde et de l'acétate de polyvinyle varie de 95:5 à 5:95.

3. Utilisation selon la revendication 2, où le rapport de poids de la résine de phénol-formaldéhyde et de l'acétate de polyvinyle varie de 90:10 à 10:90.

4. Utilisation selon la revendication 2 ou 3, où le rapport de poids de la résine de phénol-formaldéhyde et de l'acétate de polyvinyle varie de 80:20 à 60:40.

5. Utilisation selon les revendications 1-4, où l'acétate de polyvinyle est un copolymère d'acétate de vinyle et d'éthylène.

6. Utilisation selon les revendications 1-4, où l'acétate de polyvinyle est un copolymère d'acétate de vinyle et de chlorure de vinyle.

7. Utilisation selon les revendications 1-6, où la préparation de liant contient un agent hydrofuge.

8. Utilisation selon la revendication 7, où l'agent hydrofuge comprend de la laine minérale, de l'huile de silicone.

9. Utilisation selon les revendications 1-8, où la préparation de liant contient une substance résistante au feu.

10. Utilisation selon la revendication 9, où la substance résistante au feu comprend des composés halogénés, des composés phosphorés, du polyphosphate d'ammonium.

11. Produit en laine minérale comprenant une matrice cohérente de fibres de laine minérale liées à une préparation de liant cuite, selon la revendication 1-10, ayant une densité de 5 à 200 kg/m³.

12. Produit en laine minérale selon la revendication 11, comprenant 0,5 à 10% en poids de la préparation de liant.

13. Produit en laine minérale selon la revendication 11 ou 12, avec une émission de poussière inférieure à 1 g/m², quand le produit en laine minérale est placé sur une grille et muni d'un contreplaqué et quand on laisse tomber un poids de 5 kg sur le contreplaqué d'une hauteur de 1 mètre.

14. Produit en laine selon la revendication 13, où l'émission de poussière est inférieure à 0,5 g/m², de préférence inférieure à 0,3 g/m².

15. Produit en laine minérale selon les revendications 11-14, avec une perte d'épaisseur inférieure à 5% après 25% de compression pendant 4 semaines.

16. Produit en laine minérale selon la revendication 15, où la perte d'épaisseur est inférieure à 3 %, de préférence inférieure à 2 %, après 25% de compression pendant 4 semaines.
